# EUROPEAN PATENT SPECIFICATION

(11) **EP 1 904 700 B1**
(45) Date of publication and mention of the grant of the patent: **15.12.2010**
(21) Application number: 06778520.4
(22) Date of filing: 07.07.2006
(51) Int. Cl.: E04H 5/02, E04H 15/22, B01D 53/72

(54) **BUILDING DESIGNED FOR STORING FOUL-SMELLING EFFLUENTS**
ZUR LAGERUNG VON SCHLECHT RIECHENDEN ABWÄSSERN KONSTRUIERTES GEBÄUDE
BATIMENT CONÇU POUR LE STOCKAGE D'EFFLUENTS NAUSEABONDS

(30) Priority: 08.07.2005 FR 0552108
(43) Date of publication of application: 02.04.2008
(73) Proprietor: Ahlstrom Research and Services, 38780 Pont-Evêque (FR); Ahlstrom Corporation, 00180 Helsinki (FI)
(72) Inventor: DUSSAUD, Joseph, F-38780 Pont-Evêque (FR)
(74) Representative: Ansala, Jyrki Matti
(86) International application number: PCT/FI2006/050326
(87) International publication number: WO 2007/006866

(56) References cited:
- WO-A-2004/048719
- DE-A- 2 701 937
- DATABASE WPI Week 200352 Thomson Scientific, London, GB; AN 2003-552053 -& KR 2003 0029415 A (SEOUL FILTEC ENG CO LTD) 14 April 2003 (2003-04-14)
- DATABASE WPI Week 198418 Thomson Scientific, London, GB; AN 1984-110235 -& JP 59 050002 A (MITSUBISHI ELECTRIC CORP) 22 March 1984 (1984-03-22)

## Description

The invention relates to a closed building designed to store foul-smelling effluents, according to claim 1. It also relates to the use of such a building.

In the rest of the description, the invention is more particularly described in relation to storing paper making sludge. However, this application is by no means restrictive since the building of the invention may be used for storing any type of foul-smelling effluents, whether liquid or solid effluents, such as for example composting sludge.

Every day the paper industry is confronted with the problem of storing sludge and especially the foul-smelling odors let off by this sludge. Mainly, papermaking sludge is presented in the form of a semi-solid material corresponding to a mixture of chemicals and fibers, obtained after separation of water from the discharge flows of the paper making process.

It should be known that the daily fabrication of 120 tons of paper generates the production of 6 tons of sludge at 30% concentration.

Paper making sludge is conventionally used, with authorization of the prefecture (local authorities), for land farming of agricultural lands. The main interest in land farming resides in that the previously limed sludge has the effect of increasing the pH of the soil and producing mineralizable vegetal organic compounds. In fact, it has been observed that the pH of the soil becomes more and more acidic and therefore potentially toxic to the vegetation.

However, land farming cannot be performed, for instance in France, on cultivated terrains, so that the period authorized for this application of paper making sludge extends over six months of the year, respectively between July and December in France. Consequently, the paper industry i.e. the paper mills must store this sludge during the rest of the year. At a rate of 6 tons per day, one can easily imagine the odors let off for 6 months depending on climate conditions and the harmful influence of these odors on the environment, particularly in relation to the habitations situated near these storage areas.

To resolve the problem in the most economical manner possible, the Applicant suggests the use of a building designed for storing foul-smelling materials.

One example of a building designed for storing somewhat similar material is disclosed in WO-A1-2004048719, which discusses a covering structure of a flexible device used for covering poured or stacked material, especially for the aerobic treatment of waste containing organic matter, such as residual waste or garbage, in a rotting pit. The covering structure comprises a tarpaulin that is provided with a number of supporting elements, which can be filled with at least one fluid and are at least partly interconnected, and at least one waterproof, gas-permeable planar structure. Said planar structure is connected to the supporting elements. The device forms an erected and a lowered state depending on whether the supporting elements are filled or not. The planar structure covers the material and is respectively raised and lowered when the supporting elements are filled and emptied.

However, the prior art covering structure has some disadvantages, like for instance the fact that its purposed use is to dry the material inserted inside the covering structure. For such a purpose the walls of the covering structure are gas-permeable, but not water permeable. However, the gas-permeability has been arranged such that the foul smelling effluents are not able to pass the wall and spread in the environment.

The present invention solves the above discussed drawback by presenting a building according to claim 1, and the use of such a building according to claim 18.

Another prior art document, KR 2003-552043, discloses an apparatus for eliminating odor and volatile organic compounds from polluted air. The apparatus is provided with a suction blower for creating a negative pressure for drawing polluted air through a pretreatment chamber to a treatment chamber, which is provided with photo-oxidation means to oxidize the odor and volatile compounds. The photo-oxidation means include honeycombs coated with titanium dioxide and UV lamps positioned between the honeycombs.

The principle of photocatalysis is well known. In a broad outline, the photocatalytic reaction is initiated by activating a solid semi-conductor named "photocatalyst agent," for example, titanium dioxide (Ti02) by UV radiation of a wavelength of 380 nm provoking electronic changes within the semiconductor and leading to, in the presence of air or water, the creation of oxygenated radicals at the surface of the semiconductor. These radicals attack the organic compounds adsorbed on the semiconductor and by a series of chemical reactions involving the oxygen in air and water, degrade the organic compounds until the carbon in the carbonated chains is completely transformed into carbon dioxide (CO2).

For the photocatalysis application, the Applicant developed supports, also named "filtering media", combining the fiber support as such and a photocatalyst agent by means of a binding agent. This technology is more closely described in document EP-A-1 069 950 incorporated as a reference herein.

Improved photocatalytic supports have been developed, still by the Applicant, in which the photocatalyst agent is combined with activated carbon. The activated carbon, through its elevated specific surface area, in fact allows the polluting agents to be adsorbed, while the photocatalyst agent, under the effect of the ultraviolet radiation, degrades the pollutants thus fixed and regenerates the carbonated support. Such supports are described in applications WO-A1-00/13950 and WO-A1-04/033069 incorporated as a reference herein.

Consequently, an object of the invention is a closed building, designed to store foul-smelling effluents and presenting, in accordance with an aspect of the present invention, at least means for introducing the sludge or effluents into the building, as well as openings that form a communication between the interior of the building and the exterior thereof i.e. atmosphere. Characteristic features of the building are that the building is in positive pressure and that said openings are covered, either in part or completely, by a permeable support that is capable of destroying the organic pollutants present in the effluents by photocatalysis.

In other words, the invention comprises a construction of a closed edifice, whose placing in positive pressure (resulting from the elevation in the inside temperature being caused by the fermentation of the sludge) allows the polluted air to circulate from inside towards the outside atmosphere across the permeable supports fitted in the openings, the pollutants being degraded by photocatalysis under the effect of natural or artificial exterior UV radiation, while passing the supports.

According to another aspect of the present invention, the building comprises at least one gate allowing access for dump trucks inside the edifice. In practice, the gate is presented in the form of a sliding gate or a rolling door.

According to yet another aspect of the present invention the building is provided with means for introducing the effluents or sludge into the building without a need to open a door. Such means may be formed of a hopper or like device outside the building into which the trucks dump their load. The hopper is provided with means for transferring the effluents into the building. The type of such means depends on the consistency of the sludge. If the sludge consistency is low, the means may be a centrifugal pump. If the consistency is higher the means may be a screw feeder, or a transport belt, just to name a few alternatives. Preferably either the hopper or the transfer means is provided with a closure so that no gases from inside of the building are allowed to escape via the transfer means or the hopper.

To facilitate circulation of air and the movement of trucks, in case the trucks are driven inside the building, the building lacks any interior separation or intermediate walls, in such a way that it is presented in the form of a single platform.

Of course, any permeable support usable for photocatalysis may be utilized.

In a first embodiment, the permeable support is a fibrous support, that is, a support based on the use of organic and/or inorganic fibers coated with a photocatalyst agent-based layer.

In the description below and in the claims, the expression "organic and/or inorganic chemical fibers" designates, among organic fibers with the exception of activated carbon fibers, particularly cellulose fibers; synthetic fibers of the type, for example, polyester, polyethylene, polypropylene, polyamide, polyvinyl chloride, polyvinyl alcohol, acrylic, nylon; artificial fibers, for example viscose, cellulose acetate; natural fibers, for example cotton, wool, wood pulp and among the inorganic fibers, especially mineral fibers, for example glass and ceramic.

As concerns the photocatalyst-agent-based layer, the latter contains in practice between 5 and 40 g/m² of a photocatalyst agent, chosen from the group comprising metal oxides, oxides comprising alkaline earth metals, actinide oxides and rare earth oxides. In practice, the photocatalyst agent is presented in the form of a mixture comprising between 10 and 60 dry parts, advantageously 50 parts of an aqueous colloidal dispersion of silica, the complement to 100% being comprised of anatase TiO₂. In addition, the SiO₂ particles represent from 1 to 50% by.weight of the colloidal dispersion and have a diameter between 10 and 40 nm.

In a second embodiment of the invention, the photocatalyst agent is associated with activated carbon. In a manner that is known to a person skilled in the art, the activated carbon is presented in the form of activated carbon fibers or particles or powder, of a particle size distribution of between 2 and 300 µm. Whatever the form of activated carbon, the latter has the disadvantage of not presenting any binding capacity. Therefore, it is necessary to give a certain rigidity to the support by mixing the activated carbon particles and/or the activated carbon fibers with a mixture of organic and/or inorganic chemical fibers.

Advantageously, the permeable support is presented in the form of three stacked layers, respectively an inner layer and two outer layers, the inner layer being comprised of 80 to 95% dry weight of activated carbon, the complement to 100% being comprised of organic and/or inorganic chemical fibers, the outer layers comprising from 5 to 25% dry weight of activated carbon, the complement to 100% being comprised of organic and/or inorganic chemical fibers.

In this embodiment of the invention, to ensure the photocatalytic reaction, the outer layer of the support facing the outside of the building is covered with a photocatalyst agent-based layer applied under the same conditions as previously mentioned.

As concerns the building as such, the latter is generally equipped with a rigid concrete, metal or wood frame and a rigid roof. In an advantageous and economical embodiment, the lateral walls of the housing are presented in the form of a flexible sheet in which the openings are directly cut. Of course, any other type of material and in particular concrete may be contemplated for construction of the walls.

To facilitate the establishment of flexible permeable supports in the opening, the openings made in the sheet are aligned at least horizontally, each opening being separated from the neighboring opening by a discontinuous casing in which a support band of the height of the opening slides over substantially all the length of the wall.

To avoid deterioration of the transversal support, particularly under the effect of air currents created by the different openings, said openings are equipped with a grating inside and outside allowing the support to be held in place. Additionally, the openings may be provided with means for clamping the support in an air-tight manner against, for instance, the sides of the opening so that the effluent gases are not able to escape the building via the openings.

According to a further aspect of the present invention the building may be provided with other types of openings with permeable supports for treating the effluent gases. In other words, in the inside of the building, for instance, in the vicinity of the roof, there may be arranged a cavity separated from the rest of the building interior by means of the permeable support. Since this structure is inside the building the efficient working of the photocatalysis reactions probably need UV lamps to be provided in the cavity. The cavity may be connected to the atmosphere by means of a ventilation duct, or just by means of an opening, for instance at either end of the building.

To avoid the creation of pockets of pollutants and therefore the concentration of dangerous materials under the roof, the structure is equipped with fans distributed homogenously near the roof, over the entire surface in order to create a mixing of gas and therefore increase the positive pressure. When the lateral walls are presented in the form of a sheet, the wall advantageously presents a sleeper wall that is roughly the height of a truck, preventing the latter from damaging said sheet during maneuvering the load and unloading the sludge inside the building.

To avoid any risk of soil contamination, the building is equipped with a concrete slab on which the "to-be-stored" paper making sludge or effluents from the purification, composting or other equivalent effluent stations are directly disposed.

The invention and resulting advantages will be better understood from the exemplary embodiment supported by the attached figures.
Figure 1 is a schematic representation in perspective of the building in accordance with a preferred embodiment of the present invention,
Figure 2 is a view of the inside of a wall,
Figure 3 is a sectional view of a wall according to line A-A' of Fig. 2, and
Figure 4 is a section of a wall according to line B-B' of Fig. 2.

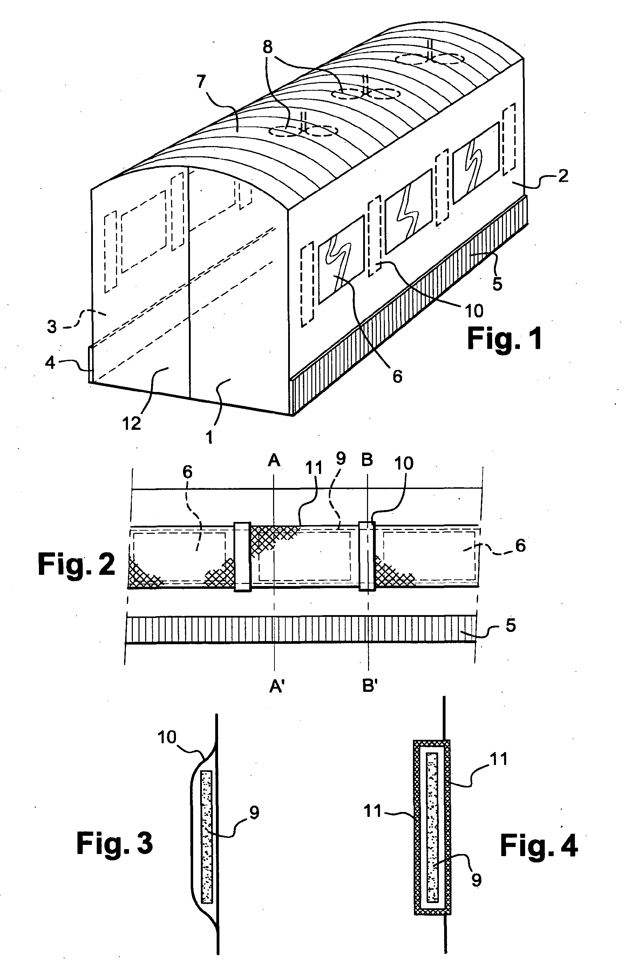

In Figure 1, the building according to the invention is represented in perspective. This building is generally of a rectangular shape corresponding to the shape that is most suitable for storing the maximum amount of paper making sludge. In the exemplary embodiment of the present invention, the building has a length of 50 m, a width of 30 m and a height of 8 m under the ridge board. In practice, the height must be sufficient to allow an dump truck to pass through.

This building comprises a concrete slab (1), under three lateral walls (2, 3) (the bottom wall not being visible), sleeper walls (4, 5) in reinforced concrete of a height that is sufficient for avoiding accidental contact by trucks with the flexible walls (2, 3) during maneuvers. The sleeper walls (4, 5) are themselves solid with a flexible sheet in which openings (6) are directly cut. These openings are of identical size and they are aligned and regularly distributed over the entire length of the three walls. As shown in Figure 1, the enclosure is furthermore equipped with a roof (7) advantageously made of corrugated metal, the roof being furthermore equipped with fans (8). The fourth wall of the building comprises, in this embodiment of the invention, a gate (12) in the form of a sliding door or even a rolling door.

Figures 2, 3 and 4 represent the positioning of the photocatalytic supports (9) at the level of the openings (6). More precisely, the support (9) is presented in the form of a band with a width that roughly corresponds to the height of the opening and with a length roughly corresponding to the length of the wall (see Figure 2). This continuous band is inserted in a discontinuous casing (10), positioned between each opening (6). At the level of the opening and as can be seen in Figure 3, the filter support covers the entire area of the opening and is held in place by means of gratings (11) positioned on both sides of the opening.

According to the invention, the building is maintained in positive pressure by the elevation of temperature within the enclosure due to the presence of sludge in fermentation, in such a way as to force the passage of air containing the pollutants present in the enclosure from the inside towards the outside across the filter supports (9).

In practice, the filter supports may be presented in different forms, ranging from a simple fibrous support coated with a photocatalyst agent layer up to the photocatalyst and activated carbon combination such as described in the aforesaid documents. The second support is particularly advantageous since it allows, due to the presence of the activated carbon, the pollution peaks to be fixed rapidly and to adsorb the pollutants during cloudy periods and during the night.

In practice, the energy is provided either by solar radiation or by means of ultra violet (UV) lamps.

The presence of fans under the roof furthermore allows the creation of pockets of polluting agents near the ridge board to be avoided and allows the pollutants to be agitated in order to put them in contact with the filter supports.

The invention and resulting advantages show up very well in the above description, in particular in the easy and inexpensive construction of the housing and its effectiveness. In fact, the principle of photocatalysis allows all the foul-smelling odors emitted, particularly from paper making sludge, composting sludge, solid distillery effluents, agriculture and food system industry effluents, etc., to be suppressed.

## Claims

1. A closed building designed to store foul-smelling effluents, the building being provided with means for introducing the effluents in the building, and with openings (6), by means of which the interior of the building is in communication with the atmosphere, the openings being provided with a permeable support (9), **characterized in that** the permeable support (9) is provided with means for destroying, by photocatalysis, organic pollutants created during the storage of the effluents, the pollutants being forced from the inside towards the outside across the support by a positive pressure prevailing in the building, due to the elevation of temperature within the building due to the presence of effluents in fermentation.

2. The building according to claim 1, **characterized in that** said openings (6) are covered entirely or in part by a permeable support (9).

3. The building according to claim 1, **characterized in that** the permeable support (9), is an organic and/or inorganic fiber based support coated with a photocatalyst agent based layer.

4. The building according to claim 2 or 3, **characterized in that** the permeable support (9) comprises three stacked layers, respectively an inner layer and two outer layers, the inner layer being comprised of 80 to 95% by dry weight of activated carbon, the complement to 100% being comprised of organic and/or inorganic chemical fibers, the outer layer of the support facing the outside of the building, the support (9) being covered by a photocatalyst agent based layer.

5. The building according to any of the preceding claims, **characterized in that** the building is equipped with a rigid frame and a rigid roof (7), the lateral walls (2, 3) being presented in the form of a flexible sheet in which the openings (6) are directly cut.

6. The building according to any of the preceding claims, **characterized in that** the openings (6) are aligned at least horizontally and **in that** the permeable support (9) is present in the form of a web with a height of the opening (6) and a length roughly corresponding to the length of the wall (2, 3), the band being inserted in a discontinuous casing (10) positioned between each opening (6).

7. The building according to any of the preceding claims, **characterized in that** each opening (6) is equipped inside and outside with a grating (11) allowing the support (9) to be held in place transversally under the effect of air currents.

8. The building according to any of the preceding claims, **characterized in that** the openings (6) are provided with means for clamping the support (9) against the sides of the opening (6) for preventing the escape of pollutants from the interior of the building.

9. The building according to any of the preceding claims, **characterized in that** the building is provided with an internal cavity separated from the rest of the interior by means of said permeable support, and that said cavity is in direct communication with the atmosphere.

10. The building according to claim 9, **characterized in that** the cavity is provided with UV lighting.

11. The building according to any of the preceding claims, **characterized in that** the building is equipped with fans (8) positioned near the roof (7).

12. The building according to any of the preceding claims, **characterized in that** each wall (2, 3) comprises a sleeper wall (4, 5) made of concrete at its base.

13. The building according to any of the preceding claims, **characterized in that** the building comprises a concrete slab (1).

14. The building according to claim 1, **characterized in that** said means for introducing the effluents is at least one gate (12) allowing access for trucks.

15. The building according to claim 1, **characterized in that** said means for introducing the effluents inside the building is a centrifugal pump.

16. The building according to claim 1, **characterized in that** said means for introducing the effluents inside the building is a screw feeder.

17. The building according to claim 1, **characterized in that** said means for introducing the effluents inside the building is a transport belt.

18. Use of a building according to one of claims 1 to 17 to store at least one of paper making sludge, composting sludge, agriculture and food system industry effluents, and solid distillery effluents.

## Patentansprüche

1. Geschlossenes Gebäude, das zur Lagerung von übelriechenden Abfällen gestaltet ist, welches Gebäude mit Mitteln zur Einleitung der Abfälle in das Gebäude und mit Öffnungen (6) versehen ist, über die das Innere des Gebäudes mit der Atmosphäre in Verbindung steht, wobei die Öffnungen mit einem durchlässigen Träger (9) versehen sind, **dadurch gekennzeichnet, dass** der durchlässige Träger (9) mit Mitteln zur Zerstörung von organischen, während der Lagerung erzeugten Schadstoffen durch Photokatalyse versehen ist, welche Schadstoffe durch den innerhalb des Gebäudes herrschenden Überdruck von der Innenseite zur Außenseite durch den Träger forciert werden als Folge des Temperaturanstiegs innerhalb des Gebäudes aufgrund des Vorhandenseins von Abfällen in Fermentation.

2. Gebäude nach Anspruch 1, **dadurch gekennzeichnet, dass** besagte Öffnungen (6) ganz oder teilweise Teil von einem durchlässigen Träger (9) bedeckt sind.

3. Gebäude nach Anspruch 1, **dadurch gekennzeichnet, dass** der durchlässige Träger (9) ein Träger auf Basis von organischen und/oder anorganischen Fasern ist, der mit einer Schicht auf Basis eines Photokatalysatormittels überzogen ist.

4. Gebäude nach Anspruch 2 oder 3, **dadurch gekennzeichnet, dass** der durchlässige Träger (9) drei aufeinander geschichtete Schichten, beziehungsweise eine innere Schicht und zwei äußere Schichten, umfasst, welche innere Schicht zu 80 bis 95 % Trockengewicht aus Aktivkohle besteht, wobei der Rest zu 100 % aus organischen und/oder anorganischen chemischen Fasern besteht, wobei die äußere Schicht des Trägers der Außenseite des Gebäudes zugewandt ist, welcher Träger (9) von einer Schicht auf Basis eines Photokatalysatormittels bedeckt ist.

5. Gebäude nach einem der vorhergehenden Ansprüche, **dadurch gekennzeichnet, dass** das Gebäude mit einem starren Rahmen und einer starren Decke (7) ausgestattet ist, wobei die seitlichen Wände (2, 3) in Form eines flexiblen Bogens dargestellt sind, in den die Öffnungen (6) direkt eingeschnitten sind.

6. Gebäude nach einem der vorhergehenden Ansprüche, **dadurch gekennzeichnet, dass** die Öffnungen (6) zumindest horizontal ausgerichtet sind und dass der durchlässige Träger (9) in Form einer Bahn mit einer Höhe der Öffnung (6) und einer Länge vorhanden ist, die annähernd der Länge der Wand (2, 3) entspricht, wobei das Band in ein diskontinuierliches, jeweils zwischen den Öffnungen (6) positioniertes Gehäuse (10) eingesetzt ist.

7. Gebäude nach einem der vorhergehenden Ansprüche, **dadurch gekennzeichnet, dass** jede Öffnung (6) auf der Innenseite und auf der Außenseite mit einem Abdeckgitter (11) versehen ist, wodurch es möglich ist, den Träger (9) unter der Wirkung von Luftströmungen transversal auf der Stelle zu halten.

8. Gebäude nach einem der vorhergehenden Ansprüche, **dadurch gekennzeichnet, dass** die Öffnungen (6) mit Mitteln fürs Einspannen des Trägers (9) an die Seiten der Öffnung (6) versehen sind, um ein Entweichen von Schadstoffen aus dem Inneren des Gebäudes zu verhindern.

9. Gebäude nach einem der vorhergehenden Ansprüche, **dadurch gekennzeichnet, dass** das Gebäude mit einem inneren Hohlraum versehen ist, der mittels eines durchlässigen Trägers vom Rest des Innenraums getrennt ist, und dass besagter Hohlraum in direkter Verbindung mit der Atmosphäre steht.

10. Gebäude nach Anspruch 9, **dadurch gekennzeichnet, dass** der Hohlraum mit einer UV-Beleuchtung ausgestattet ist.

11. Gebäude nach einem der vorhergehenden Ansprüche, **dadurch gekennzeichnet, dass** das Gebäude mit Gebläsen (8) ausgestattet ist, die nahe der Decke (7) angeordnet sind.

12. Gebäude nach einem der vorhergehenden Ansprüche, **dadurch gekennzeichnet, dass** jede Wand (2, 3) an ihrem Fuß einen aus Beton gefertigten Fundamentsockel (4, 5) aufweist.

13. Gebäude nach einem der vorhergehenden Ansprüche, **dadurch gekennzeichnet, dass** das Gebäude eine Betongrundplatte (1) umfasst.

14. Gebäude nach Anspruch 1, **dadurch gekennzeichnet, dass** besagte Mittel fürs Einbringen der Abfälle zumindest ein Tor (2) umfassen, das den Zugang mit Lastwagen erlaubt.

15. Gebäude nach Anspruch 1, **dadurch gekennzeichnet, dass** es sich bei besagten Mitteln zur Einbringung der Abfälle in das Gebäude um eine Kreiselpumpe handelt.

16. Gebäude nach Anspruch 1, **dadurch gekennzeichnet, dass** es sich bei besagten Mitteln zur Einbringung der Abfälle in das Gebäude um einen Schneckenförderer handelt.

17. Gebäude nach Anspruch 1, **dadurch gekennzeichnet, dass** es sich bei besagten Mitteln zur Einbringung der Abfälle in das Gebäude um ein Förderband handelt.

18. Benutzung eines Gebäudes nach einem der Ansprüche 1 bis 17 zur Lagerung von zumindest einem aus Papierherstellungsschlamm, Kompostschlamm, Abfällen von Landwirtschaft und Lebensmittelindustrie sowie festen Brennereiabfällen.

## Revendications

1. Bâtiment fermé destiné au stockage d'effluents nauséabonds, présentant au moins un moyen pour l'introduction d'effluents dans le bâtiment ainsi que des ouvertures (6), à travers lesquelles l'intérieur du bâtiment est en communication avec l'atmosphère, les ouvertures étant munies d'un support (9) perméable, **caractérisé en ce que** le support (9) perméable est apte à détruire, par photocatalyse, les polluants organiques créés pendant le stockage d'effluents, les polluants étant forcés à partir de l'intérieur vers l'extérieur à travers le support à l'aide de la pression positive présent dans le bâtiment en raison de l'élévation de température à l'intérieur du bâtiment en raison de présence des effluents en fermentation.

2. Bâtiment selon la revendication 1, **caractérisé en ce que** lesdites ouvertures (6) sont en toute ou partie recouvertes d'un support (9) perméable.

3. Bâtiment selon la revendication 1, **caractérisé en ce que** le support (9) perméable est un support à base de fibres organiques et/ou inorganiques enduit d'une couche à base d'agent photocatalyseur.

4. Bâtiment selon la revendication 2 ou 3, **caractérisé en ce que** le support (9) perméable comprend trois couches superposées, respectivement une couche interne et deux couches externes, la couche interne étant constituée de 80 à 95 % en poids sec de carbone activé, le complément à 100% étant constitué de fibres chimiques organiques et/ou inorganiques, la couche externe du support (9) en regard de l'extérieur du bâtiment étant recouverte d'une couche à base d'agent photocatalyseur.

5. Bâtiment selon l'une quelconque des revendications précédentes, **caractérisé en ce que** le bâtiment est muni d'une armature et d'un toit (7) rigides, les parois (2,3) latérales se présentant sous la forme d'une bâche souple dans laquelle sont directement découpées les ouvertures (6).

6. Bâtiment selon l'une quelconque des revendications précédentes, **caractérisé en ce que** les ouvertures sont alignées au moins horizontalement et **en ce que** le support (9) perméable se présente sous la forme d'une bande de la hauteur de l'ouverture (6) et d'une longueur correspondant sensiblement à la longueur de la paroi (2,3), la bande étant insérée dans un fourreau (10) discontinu positionné entre chaque ouverture (6).

7. Bâtiment selon l'une quelconque des revendications précédentes, **caractérisé en ce que** chaque ouverture (6) est équipée à l'intérieur et à l'extérieur d'une grille (11) permettant de maintenir en place transversalement le support (9) sous l'effet des courants d'air.

8. Bâtiment selon l'une quelconque des revendications précédentes, **caractérisé en ce que** les ouvertures (6) sont munies des moyens à serrer le support (9) contre les bords de l'ouverture (6) afin d'empêcher la fuite des polluants à partir de l'intérieur du bâtiment.

9. Bâtiment selon l'une quelconque des revendications précédentes, **caractérisé en ce que** le bâtiment est prévue d'une cavité interne séparée du reste de l'intérieur à l'aide dudit support perméable, et ladite cavité est en communication directe avec l'atmosphère.

10. Bâtiment selon la revendication 9, **caractérisé en ce que** la cavité est équipée d'éclairage UV.

11. Bâtiment selon l'une quelconque des revendications précédentes, **caractérisé en ce que** le bâtiment est équipé de ventilateurs (8) positionnés à proximité du toit (7).

12. Bâtiment selon l'une quelconque des revendications précédentes, **caractérisé en ce que** chaque paroi (2,3) est constituée à sa base d'un muret (4,5) réalisé en béton.

13. Bâtiment selon l'une quelconque des revendications précédentes, **caractérisé en ce qu'**il comprend une dalle (1) réalisée en béton.

14. Bâtiment selon la revendication 1, **caractérisé en ce que** ledit moyen pour introduire les effluents est au moins un portail (12) permettant l'accès de camions.

15. Bâtiment selon la revendication 1, **caractérisé en ce que** ledit moyen pour l'introduction d'effluents à l'intérieur du bâtiment est une pompe centrifuge.

16. Bâtiment selon la revendication 1, **caractérisé en ce que** ledit moyen pour l'introduction d'effluents à l'intérieur du bâtiment est un alimenteur à vis.

17. Bâtiment selon la revendication 1, **caractérisé en ce que** ledit moyen pour l'introduction d'effluents à l'intérieur du bâtiment est un transporteur à bande.

18. Utilisation d'un bâtiment selon l'une des revendications 1 à 17 pour le stockage au moins l'un des boues papetières ou boues de compostage, d'effluents de l'industrie agro-alimentaire, d'effluents solides de distillerie.
